(19) **Europäisches Patentamt**
**European Patent Office**
**Office européen des brevets**

(11) **EP 4 697 646 A1**

(12) **EUROPEAN PATENT APPLICATION**
published in accordance with Art. 153(4) EPC

(43) Date of publication:
**18.02.2026 Bulletin 2026/08**

(21) Application number: **24810269.1**

(22) Date of filing: **14.05.2024**

(51) International Patent Classification (IPC):
***H04L 9/32*** *(2006.01)*

(52) Cooperative Patent Classification (CPC):
**H04L 9/08; H04L 9/32; H04L 9/40; H04L 67/12**

(86) International application number:
**PCT/CN2024/093161**

(87) International publication number:
**WO 2024/240022 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023 CN 202310572263**

(71) Applicant: **Huawei Technologies Co., Ltd.
Shenzhen, Guangdong 518129 (CN)**

(72) Inventors:
• **ZHAO, Yang**
**Shenzhen, Guangdong 518129 (CN)**
• **LI, Yong**
**Shenzhen, Guangdong 518129 (CN)**
• **XIE, Xiaoqing**
**Shenzhen, Guangdong 518129 (CN)**
• **GAO, Han**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA TRANSMISSION METHOD, APPARATUS, COMPUTER DEVICE AND COMMUNICATION SYSTEM**

(57)    This application discloses a data transmission method and apparatus, a computer device, and a communication system, relating to the communication field. The method includes: generating an authentication key based on a security credential distributed by an authentication center, and after mutual authentication between devices is performed based on authentication code generated based on the authentication key, transmitting encrypted data obtained by encrypting with an encryption key. In this way, authentication is performed based on the generated authentication key, and transmission of the authentication key does not need to be performed between the devices, preventing the authentication key from being intercepted and improving security of the authentication key while reducing network attacks. The authentication center does not need to manage the authentication key or the security credential, thus decentralizing an authentication mechanism and simplifying key management. In addition, the authentication key is small in data size, meeting storage requirements of an internet of things device with limited resources. Therefore, security authentication on the internet of things device is implemented, network attacks on internet of things are reduced, and network security of internet of things is improved.

FIG. 3

EP 4 697 646 A1

**Description**

This application claims priority to Chinese Patent Application No. 202310572263.9, filed with the China National Intellectual Property Administration on May 19, 2023 and entitled "DATA TRANSMISSION METHOD AND APPARATUS, COMPUTER DEVICE, AND COMMUNICATION SYSTEM", which is incorporated herein by reference in its entirety.

**TECHNICAL FIELD**

This application relates to the communication field, and in particular, to a data transmission method and apparatus, a computer device, and a communication system.

**BACKGROUND**

With the development of internet of things, a quantity and types of internet of things devices have increased accordingly. Because resources (for example, storage resources and computing power resources) of internet of things devices are limited, conventional authentication mechanisms cannot be used to authenticate the internet of things devices. Consequently, the internet of things devices provide a physical environment for network attacks, making the internet of things highly vulnerable to network attacks, resulting in frequent communication security incidents.

**SUMMARY**

This application provides a data transmission method and apparatus, a computer device, and a communication system, to implement security authentication on an internet of things device with constrained resources, reduce network attacks on an internet of things, and improve network security of the internet of things.

According to a first aspect, a data transmission method is provided, and includes: generating an authentication key based on a security credential distributed by an authentication center; and after mutual authentication between devices is performed based on authentication code generated based on the authentication key, transmitting encrypted data obtained by encrypting with an encryption key.

During symmetric key encryption, the authentication center needs to store a shared key, and transmission of the shared key needs to be performed between the devices. It is difficult to manage the shared key and the shared key is easy to be obtained, resulting in network attacks. During asymmetric key encryption, a certificate and a public key occupy large network bandwidth and more storage resources. In comparison, according to the solution provided in this application, authentication is performed based on the generated authentication key, and transmission of the authentication key does not need to be performed between the devices, to reduce occupied bandwidth, avoid obtaining of the authentication key, improve security of the authentication key, and reduce network attacks. The authentication center does not need to manage the authentication key or the security credential, so that an authentication mechanism is decentralized, and complexity of key management is reduced. In addition, a data amount of the authentication key is small, and a storage requirement of an internet of things device with constrained resources is satisfied. Therefore, security authentication on the internet of things device with constrained resources is implemented, network attacks on an internet of things are reduced, and network security of the internet of things is improved.

In a possible implementation, the method further includes: generating the encryption key based on the security credential. Therefore, security of the encryption key is improved.

In another possible implementation, generating the authentication key based on the security credential includes: according to an elliptic curve cryptography, generating the authentication key based on the security credential. The elliptic curve cryptography has advantages of high security, a high processing speed, small occupied storage space, and small bandwidth that needs to be occupied. Therefore, the authentication key is generated according to the elliptic curve cryptography, so that a calculation amount is small, a data amount of the authentication key is small, lightweight security authentication on an internet of things device in an internet of things is implemented, and a resource performance requirement of the internet of things device is satisfied.

In another possible implementation, generating the authentication key based on the security credential includes: generating a public key of a second device based on a public key of the authentication center and the security credential; and generating the authentication key based on the public key of the second device and a private key of a first device.

In this way, the public key of the devices is generated based on a hash function according to the elliptic curve cryptography, and the authentication key is generated based on the public key of the devices. In other words, a same authentication key is generated based on different input parameters according to an asymmetric encryption algorithm. Transmission of the public key and the authentication key does not need to be performed between the devices, to avoid obtaining of the public key and the authentication key by an unauthorized device (for example, an attack device), and improve security of the public key and the authentication key.

In another possible implementation, the method further includes: calculating an identifier of the first device and a random number based on the authentication key, to generate the authentication code. Because the random number is used as an input parameter for generating the authentication code, security of the authentication code is improved.

In another possible implementation, the security credential includes at least one of an identifier of the authentication center, a security parameter, a hash function, and an elliptic curve identifier.

In another possible implementation, the method further includes: when verifying the security credential as valid, generating a public key and the private key of the first device based on the security credential.

In another possible implementation, verifying the security credential as valid includes: verifying the security credential as valid based on the public key of the authentication center, the identifier of the first device, and the identifier of the authentication center.

Therefore, security of a key is further ensured by verifying the security credential, and a case in which a public key and a private key of a device are generated by using an invalid security credential is avoided.

In another possible implementation, the method further includes: updating the public key and a private key of the authentication center; or updating the public key and the private key of the first device.

In this way, based on a key update mechanism, a key is updated before a life cycle of the key ends, or when it is known or possible that the key is leaked, to improve security of the public key and the private key of the device, the security credential, the authentication key, and the encryption key in an internet of things.

In another possible implementation, the method further includes: receiving a revocation request; and performing a revocation operation based on the revocation request. The revocation request includes a revocation list and a public key of an authentication device, and the revocation list includes the identifier of the first device.

According to a second aspect, a data transmission method is provided. The method includes: receiving authentication code sent by a first device; when verification code generated based on a second authentication key is the same as the authentication code, determining that the first device is successfully authenticated; and receiving encrypted data sent by the first device. The authentication code is calculated based on a first authentication key that is generated based on a first security credential. The encrypted data is obtained by encrypting with a first encryption key, and the first encryption key is calculated based on the first security credential.

In this way, the authentication code sent by the first device is verified based on an authentication key generated by a second device, and transmission of the authentication key does not need to be performed between the devices, to avoid obtaining of the authentication key by an unauthorized device, and improve security of the authentication key. Two-way authentication is completed between the first device and the second device based on the authentication key, a data amount of ciphertext is small, and occupied bandwidth is reduced. Therefore, security authentication on an internet of things device with constrained resources is implemented, network attacks on an internet of things are reduced, and network security of the internet of things is improved.

In a possible implementation, the method further includes: obtaining a second security credential from an authentication center; and generating the second authentication key based on the second security credential.

In this way, authentication is performed based on the generated authentication key, and transmission of the authentication key does not need to be performed between devices, to reduce occupied bandwidth, avoid obtaining of the authentication key, improve security of the authentication key, and reduce network attacks. The authentication center does not need to manage the authentication key or the security credential, so that an authentication mechanism is decentralized, and complexity of key management is reduced. In addition, a data amount of the authentication key is small, and a storage requirement of an internet of things device with constrained resources is satisfied. Therefore, security authentication on the internet of things device with constrained resources is implemented, network attacks on an internet of things are reduced, and network security of the internet of things is improved.

In another possible implementation, the method further includes: generating the second authentication key based on the second security credential according to an elliptic curve cryptography.

In another possible implementation, generating the second authentication key based on the second security credential includes: generating a public key of the first device based on a public key of the authentication center and the second security credential; and generating the second authentication key based on the public key of the first device and a private key of a second device.

In another possible implementation, generating the verification code based on the second authentication key includes: calculating an identifier of the first device and a random number based on the second authentication key, to generate the verification code.

According to a third aspect, a data transmission method is provided. The method includes: generating a first security credential based on a random number, an identifier of a first device, an identifier of an authentication center, and a private key of the authentication center; and feeding back the first security credential to the first device, where the first security credential is used by the first device to generate an authentication key and perform authentication with a second device.

In this way, the authentication center distributes the first security credential to the first device, so that the first device generates a public key and a private key of the first device, and the authentication key based on the security credential, to improve security of the key. The authentication center manages a public key and the private key of the authentication center, and does not need to manage the public key or the private key of the device, or the security credential, so that an authentication mechanism of an internet of things is decentralized, and complexity of key management is reduced.

In another possible implementation, generating the first security credential based on the random number, the identifier of the first device, the identifier of the authentication center, and the private key of the authentication center includes: when verifying the first device as authorized, generating the first security credential based on the random number, the identifier of the first device, the identifier of the authentication center, and the private key of the authentication center.

In this way, after successfully verifying the first device that is to access an internet of things, the authentication center distributes the first security credential to the first device. Therefore, in a registration phase, the authentication center verifies the first device, to ensure security of distributing the security credential, and avoid distributing the security credential to an unauthorized device.

In another possible implementation, generating the first security credential based on the random number, the identifier of the first device, the identifier of the authentication center, and the private key of the authentication center includes: when verifying the first device as authorized, generating the first security credential based on the random number, the identifier of the first device, the identifier of the authentication center, and the private key of the authentication center according to an elliptic curve cryptography.

According to a fourth aspect, a data transmission apparatus is provided. The data transmission apparatus includes modules configured to perform the data transmission method in any one of the first aspect or the possible designs of the first aspect, or modules configured to perform the data transmission method in any one of the second aspect or the possible designs of the second aspect. For example, the data transmission apparatus includes a communication module, an authentication module, and an encryption module.

According to a fifth aspect, a data transmission apparatus is provided. The data transmission apparatus includes modules configured to perform the data transmission method in any one of the third aspect or the possible designs of the third aspect. For example, the data transmission apparatus includes a communication module and a registration module.

According to a sixth aspect, a computer device is provided. The computer device includes at least one processor and a memory. The memory is configured to store a group of computer instructions. When the processor is used as the first device in any one of the first aspect or the possible implementations of the first aspect to execute the group of computer instructions, the processor performs the operation steps of the data transmission method in any one of the first aspect or the possible implementations of the first aspect. When the processor is used as the second device in any one of the second aspect or the possible implementations of the second aspect to execute the group of computer instructions, the processor performs the operation steps of the data transmission method in any one of the second aspect or the possible implementations of the second aspect. When the processor is used as the authentication center in any one of the third aspect or the possible implementations of the third aspect to execute the group of computer instructions, the processor performs the operation steps of the data transmission method in any one of the third aspect or the possible implementations of the third aspect.

According to a seventh aspect, a communication system is provided. The communication system includes an authentication center, a first device, and a second device. The first device is configured to perform the operation steps of the data transmission method in any one of the first aspect or the possible implementations of the first aspect. The second device is configured to perform the operation steps of the data transmission method in any one of the second aspect or the possible implementations of the second aspect. The authentication center is configured to perform the operation steps of the data transmission method in any one of the third aspect or the possible implementations of the third aspect.

According to an eighth aspect, a chip is provided, and includes a processor and a power supply circuit. The power supply circuit is configured to supply power to the processor. The processor is configured to perform the operation steps of the method in any one of the first aspect or the possible implementations of the first aspect. The processor is configured to perform the operation steps of the method in any one of the second aspect or the possible implementations of the second aspect. The processor is configured to perform the operation steps of the method in any one of the third aspect or the possible implementations of the third aspect.

According to a ninth aspect, a computer-readable storage medium is provided, and includes computer software instructions. When the computer software instructions are run on a computer device, the computer device is enabled to perform the operation steps of the method in any one of the first aspect or the possible implementations of the first aspect; perform the operation steps of the method in any one of the second aspect or the possible implementations of the second aspect; or perform the operation steps of the method in any one of the third aspect or the possible implementations of the third aspect.

According to a tenth aspect, a computer program product is provided. When the computer program product is run on a computer, the computer is enabled to perform the operation steps of the method in any one of the first aspect or the possible implementations of the first aspect; perform the operation steps of the method in any one of the second aspect or the possible implementations of the second aspect; or perform the operation steps of the method in any one of the third aspect or the possible implementations of the third aspect.

For technical effects of any design in the fourth aspect to the tenth aspect, refer to technical effects of different designs in the first aspect to the third aspect. Details are not described herein again.

Based on the implementations provided in the foregoing aspects, the implementations in this application may be further combined to provide more implementations.

**BRIEF DESCRIPTION OF DRAWINGS**

FIG. 1 is a diagram of an internet of things architecture according to this application;
FIG. 2 is a diagram of another internet of things architecture according to this application;
FIG. 3 is a diagram of internet of things security authentication according to this application;
FIG. 4 is a schematic flowchart of data transmission in a registration phase according to this application;
FIG. 5 is another schematic flowchart of data transmission in a registration phase according to this application;
FIG. 6 is another schematic flowchart of data transmission in a registration phase according to this application;
FIG. 7 is a schematic flowchart of data transmission in an authentication phase according to this application;
FIG. 8 is another schematic flowchart of data transmission in an authentication phase according to this application;
FIG. 9 is a schematic flowchart of key update in a management phase according to this application;
FIG. 10 is a schematic flowchart of key revocation in a management phase according to this application;
FIG. 11 is a diagram of a structure of a data transmission apparatus according to this application;
FIG. 12 is a diagram of a structure of another data transmission apparatus according to this application; and
FIG. 13 is a diagram of a structure of a computer device according to this application.

**DESCRIPTION OF EMBODIMENTS**

For ease of understanding, main terms in this application are first explained.

**Internet of things (Internet of Things, IoT)** is an important part of a new generation of information technology, referring to an internet that connects things. First, the core and foundation of the internet of things is still the internet, and the internet of things is a network extended and expanded based on the internet. Second, end users of the internet of things are extended and expanded to encompass information exchange and communication between any object. Therefore, the internet of things is a type of network that connects any object to the internet according to agreed protocols by using information sensing devices such as radio frequency identification, infrared sensors, global positioning systems, or laser scanners, so as to exchange information and communicate with each other, thereby implementing intelligent identification, positioning, and management of the object.

**Secret key encryption (secret key encryption)** is an encryption service provided to ensure network security of an open network environment. In other words, the secret key encryption is an encryption method used by a transmitter and a receiver to encrypt and decrypt plaintext using asymmetric keys or symmetric keys.

For example, symmetric key encryption (Symmetric-key algorithm), also referred to as private key encryption or shared key encryption, means that terminal devices use a same key for encryption and decryption, where the key is a common secret among the terminal devices. In comparison with asymmetric cryptography, the symmetric key encryption requires that both parties need to obtain the same key, which is one of main disadvantages of the symmetric key encryption.

For another example, asymmetric cryptography (Asymmetric cryptography), also referred to as public key cryptography (Public-key cryptography), includes a public key and a private key. The public key is used to encrypt plaintext to obtain ciphertext. The private key is used to decrypt ciphertext to obtain plaintext. Because encryption and decryption require two different keys, this manner is referred to as asymmetric cryptography. The public key can be shared to the public freely, while the private key needs to remain confidential. Based on a public key encryption characteristic, a digital signature function is further provided, allowing electronic files to achieve an equivalent effect of handwritten signatures on paper files.

To reduce network attacks on the internet of things and improve network security of the internet of things, this application provides a data transmission method. To be specific, an authentication key is generated based on a security credential distributed by an authentication center, and after mutual authentication between devices is performed based on authentication code that is generated based on the authentication key, encrypted data obtained by encrypting with an encryption key is transmitted.

For symmetric key encryption, the authentication center needs to store shared keys, and transmission of the shared keys needs to be performed between devices. The difficulty in managing shared keys and their susceptibility to being obtained make them prone to network attacks. For asymmetric key encryption, certificates and public keys occupy large network bandwidth and more storage resources. In comparison, according to the solution provided in this application, because an internet of things device performs authentication based on an authentication key generated by the internet of things device itself, transmission of the authentication key does not need to be performed between internet of things devices. This avoids the authentication key being obtained, improves security of the authentication key, and reduces network attacks. The authentication center does not need to manage the authentication key or the security credential, so that an authentication mechanism is decentralized, and complexity of key management is reduced. In addition, a data amount of the authentication key is small, and a storage requirement of an internet of things device with constrained resources is satisfied. Therefore, security authentication on the internet of things device with constrained resources is implemented, network attacks on an internet of things are reduced, and network security of the internet of things is improved.

The internet of things device described in this application may be referred to as a lightweight device or a resource-limited device, and includes an internet of things device-level device defined in IETF-RFC 7228. For example, in the internet of things device, a storage capacity of a random access memory (random access memory, RAM) is less than or equal to 10 K, and a storage capacity of a read-only memory (read-only memory, ROM) is less than or equal to 100 K.

The data transmission method provided in this application may be applied to a network with any scale, and a network scale and a network type are not limited. For example, the network is a campus network, an internet of things, a local area network, or an internet. For ease of description, the internet of things is used as an example for description.

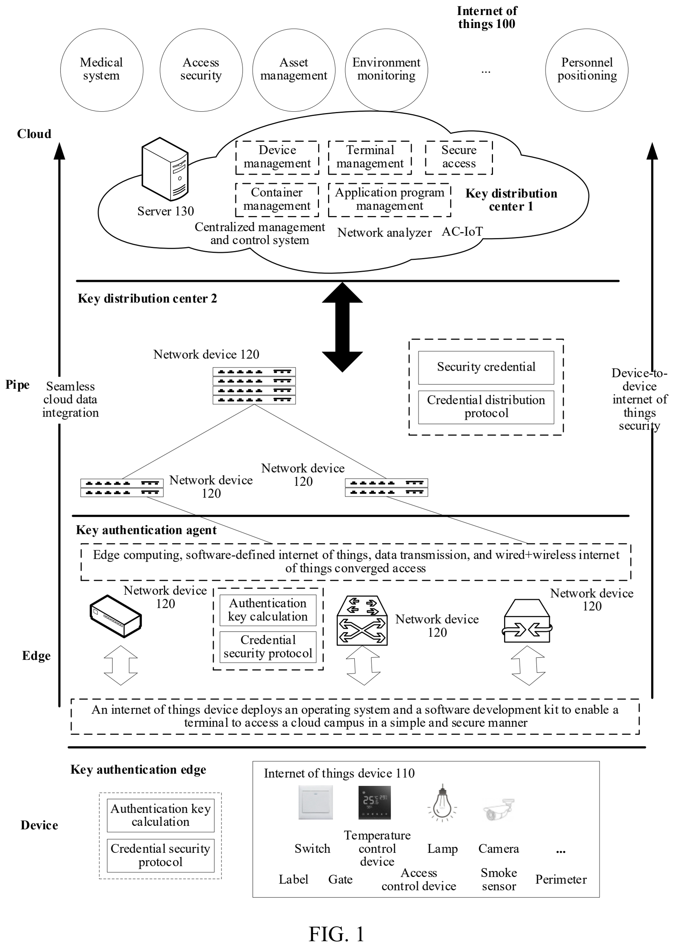

FIG. 1 is a diagram of an internet of things architecture according to this application. An internet of things in a cloud computing deployment scenario is described herein. As shown in FIG. 1, the internet of things 100 includes a device, an edge, a pipe, and a cloud. The device is configured to collect data, and the device may be used as a perception layer in the internet of things architecture. The device includes an internet of things device 110, and the internet of things device 110 includes but is not limited to terminal devices such as switches, temperature control devices, smoke sensors, lamps, labels, cameras, gates, perimeters, and access control devices.

The edge is configured to provide functions such as edge computing, a software-defined internet of things, and data transmission. For example, the edge includes infrastructure and an edge device. The pipe is configured to aggregate data and traffic and provide a transmission path for aggregated data. For example, the edge and the pipe include network devices 120. The network devices 120 include but are not limited to network switches and gateways. The edge and the pipe may be used as network layers in the internet of things architecture, and used as bridges between the end and the cloud to transmit data obtained at the perception layer to a specified destination.

The cloud may be a cloud data center, including a plurality of servers 130, configured to provide functions such as device management, terminal management, container management, application program management, and secure access. For explanations of the functions, refer to existing related descriptions. The cloud may be used as a platform layer and an application layer in the internet of things architecture. The platform layer is used for communication and operation management with devices in the internet of things. The application layer is configured to provide intelligent services based on a service field, for example, a medical system, access security, asset management, environment monitoring, and personnel monitoring.

A connection manner and link protocols of devices in the internet of things are not limited in this application. The devices in the internet of things may be connected in a wireless manner or a wired manner, to facilitate data transmission between the devices. The device link protocols include various link protocols such as Wi-Fi, an Ethernet protocol, Bluetooth, RS485, and RS232.

In this application, the cloud data center may be used as a key distribution center (Key Distribution Center, KDC), and is configured to distribute a security credential to the device in the internet of things. The edge and the pipe may be used as key authentication agents (key authentication agents, KAAs), and are configured to verify, distribute, and transmit the security credential. The device is used as a key authentication edge (key authentication edge, KAE), and is configured to: generate an authentication key based on the security credential; and after mutual authentication between the internet of things devices is performed based on authentication code generated based on the authentication key, transmit encrypted data obtained by encrypting with an encryption key.

For example, the internet of things device 110 may deploy an operating system and a software development kit (Software Development Kit, SDK), to perform security authentication based on the solution provided in this application, to facilitate secure communication between the internet of things devices.

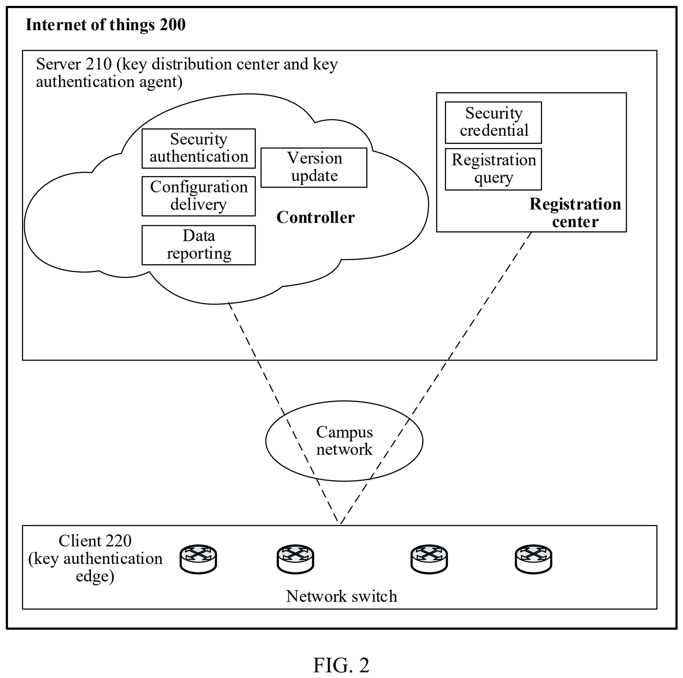

In some other embodiments, a security authentication solution provided in this application is deployed in a small campus by using a server-client (Server-Client, C/S) architecture. FIG. 2 is a diagram of another internet of things architecture according to this application. The internet of things 200 includes a server 210 and a client 220. Data transmission is performed between the server 210 and the client 220 based on a campus network. The server 210 integrates functions of a key distribution center and a key authentication agent. The server 210 provides functions such as security authentication, configuration delivery, data reporting, version update, and registration query. The client 220 serves as a key authentication edge and provides a function of the key authentication edge. For example, in a campus, a network switch serves as an authentication client, and a controller serves as a server, to complete two-way authentication based on the solution provided in this application, to facilitate secure communication.

The following describes in detail, with reference to the accompanying drawings, an implementation of internet of things-based security authentication is provided in this application.

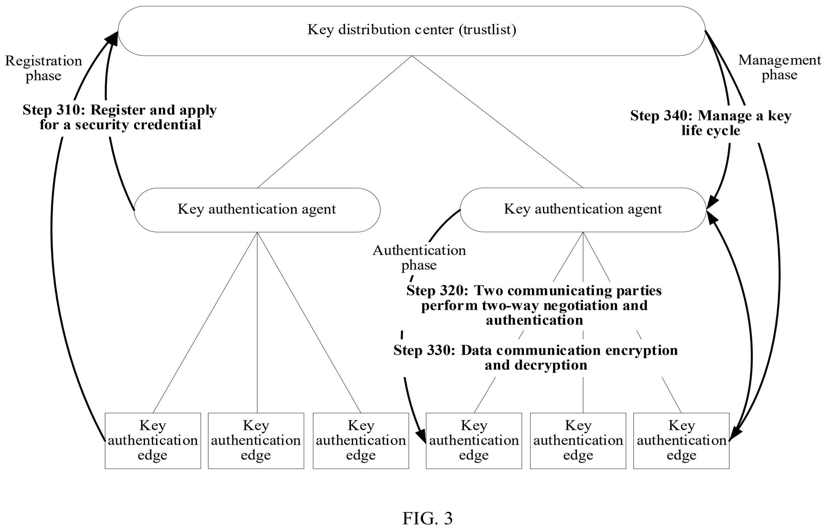

FIG. 3 is a diagram of internet of things security authentication according to this application. The internet of things security authentication includes a registration phase, an authentication phase, and a management phase.

Registration phase: Register and apply for a security credential. For example, an authentication center verifies, based on a trustlist, a device that is to access the internet of things, and the device obtains the security credential from the authentication center (step 310) after being successfully verified by the authentication center.

Authentication phase: Two communication parties perform two-way negotiation and authentication and data communication encryption and decryption. For example, the device generates an authentication key based on the security credential, and after mutual authentication between devices is performed based on authentication code generated based on the authentication key (step 320), the device transmits encrypted data obtained by encrypting with an encryption key (step 330).

Management phase: Manage a key life cycle. For example, the authentication center updates a public key and a private key of the authentication center. The device updates a public key and a private key of the device (step 340).

This application provides a certificateless lightweight authentication solution for an internet of things, which is applicable to internet of things devices with constrained resources in the internet of things. In other words, the internet of things device includes limited computing resources and limited storage resources. In this way, security authentication on the internet of things device is implemented, network attack events of the internet of things are reduced, and network security of the internet of things is improved. Problems of difficulties in key management, distribution, and maintenance, over-centralized authority of the authentication center, significant resource occupation, and low performance in a conventional authentication manner in the internet of things are solved.

The following describes the registration phase, the authentication phase, and the management phase in detail with reference to the accompanying drawings.

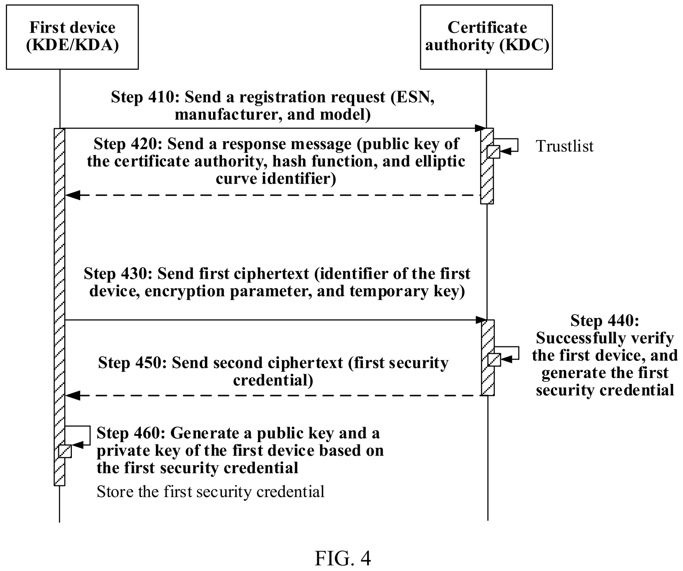

FIG. 4 is a schematic flowchart of data transmission in a registration phase according to this application. Herein, an example in which a first device accesses an authentication center is used for description. The first device may be the device serving as the key authentication agent or the key authentication edge described in FIG. 1. The authentication center may be the device serving as the key distribution center in FIG. 1. As shown in FIG. 4, the method includes the following steps.

Step 410: The first device sends a registration request to the authentication center.

The registration request includes an identifier of the first device indicative of the first device. For example, the identifier of the first device includes an electronic serial number (Electronic Serial Number, ESN), a manufacturer, a model, and the like.

Step 420: The authentication center sends a response message to the first device.

The authentication center stores a trustlist including identifiers of a plurality of devices. After receiving the registration request, the authentication center queries the trustlist. If the trustlist includes the identifier of the first device, the authentication center determines that the first device is authorized, and feeds back a response message, for example, an acknowledgement (acknowledgement, ACK), to the first device. If the trustlist does not include the identifier of the first device, the authentication center determines that the first device is unauthorized, and feeds back a response message, for example, a negative acknowledgement (non-acknowledgement, NACK), to the first device.

When the first device is authorized, the response message includes a public key of the authentication center, a hash function, and an elliptic curve identifier, so that the first device generates a public key and a private key. The public key and a private key of the authentication center may be preconfigured. The elliptic curve identifier indicates an elliptic curve, that is, a shape of the elliptic curve.

Step 430: The first device sends first ciphertext to the authentication center.

After receiving the response message, the first device calculates the identifier of the first device and a random number based on the public key of the authentication center, to obtain the first ciphertext, so that the authentication center verifies the first device and feeds back a security credential.

Optionally, the first device calculates the identifier of the first device, the random number, and a fixed character string based on the public key of the authentication center, to obtain the first ciphertext. Therefore, a possibility that the first ciphertext is deciphered is further reduced, and security of the first ciphertext is improved.

In some embodiments, the first device sends the first ciphertext to the authentication center after the first device and the authentication center perform encryption and decryption calculation once based on the public key of the authentication center and the identifier of the first device. Therefore, security of performing a registration procedure by the authentication center is improved.

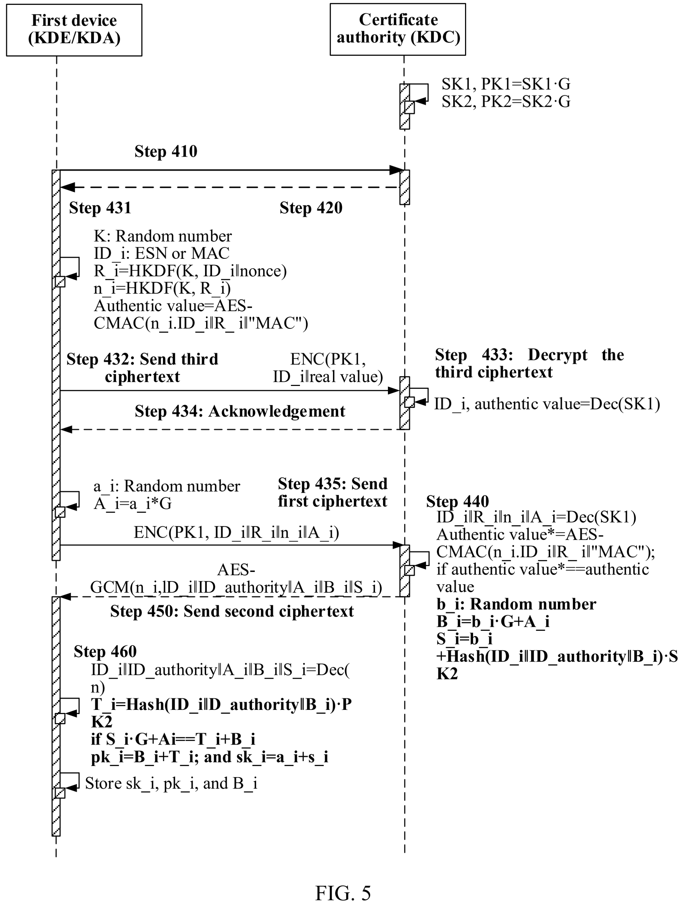

For example, as shown in FIG. 5, the first device obtains the public key of the authentication center from the authentication center. The first device calculates the identifier of the first device, an encryption parameter, and the fixed character string based on a temporary key, to obtain an authentic value (step 431). For example, the authentic value satisfies the following Formula (1).

$$\text{AuthenValue\_i} = \text{AES-CMAC}(n\_i.\text{ID\_i} \| R\_i \| \text{"MAC"}) \qquad \text{Formula (1)}$$

$$R\_i = \text{HKDF}(K, \text{ID\_i} \| \text{nonce})$$

$$n\_i = \text{HKDF}(K, R\_i)$$

AuthenValue_i represents the authentic value. AES-CMAC and HKDF represent encryption algorithms. K represents a first random number. ID_i represents the identifier of the device. nonce and MAC represent fixed character strings. R_i represents a first encryption parameter obtained based on the first random number. n_i represents the temporary key.

The first device calculates the identifier of the first device and the authentic value based on the public key of the authentication center, to obtain third ciphertext. For example, a calculation manner of the third ciphertext is as follows: ENC(PK1, ID_i‖AuthenValue).

The first device sends the third ciphertext to the authentication center (step 432), and the authentication center decrypts the third ciphertext based on the private key of the authentication center (step 433). A decryption calculation manner of the third ciphertext is as follows: AuthenValue_i=Dec(SK1). SK1 represents the private key of the authentication center.

If the decryption succeeds, it indicates that the first device is authorized, the identifier of the first device and the authentic value are obtained, and the identifier of the first device and the authentic value are stored, to verify the first device based on the identifier of the first device and the authentic value. The authentication center feeds back an acknowledgement to the first device (step 434).

The first device calculates the identifier of the first device, the encryption parameter, and the temporary key based on the public key of the authentication center, to obtain the first ciphertext, and sends the first ciphertext to the authentication center (step 435). For example, a calculation manner of the first ciphertext is as follows: ENC(PKI, ID_i‖R_i‖n_i‖A_i). PK1 represents the public key of the authentication center. A_i represents a second encryption parameter obtained based on a second random number. A_i=a_i*G. a_i represents the second random number. G represents a base point of the elliptic curve.

**Step 440: The authentication center successfully verifies the first device, and** generates a **first security credential.**

The authentication center decrypts the first ciphertext based on the private key of the authentication center, to obtain the identifier of the first device, the encryption parameter, and the temporary key. A decryption calculation manner of the first ciphertext is as follows: ID_i‖R_i‖n_i‖A_i=Dec(SK1).

The authentication center calculates the identifier of the first device, the encryption parameter, and the fixed character string based on the temporary key obtained by decrypting the first ciphertext, to obtain the authentic value. The authentication center and the first device may preconfigure a same fixed character string.

If an authentic value generated by the authentication center is the same as the authentic value of the first device stored by the authentication center, it indicates that the first device is authorized, and the authentication center generates a security parameter of the first device (step 440).

For example, if AuthenValue_i*==AuthenValue_i, AuthenValue_i*=AES-CMAC(n_i.ID_i‖R_i‖"MAC"). AuthenValue_i* represents the authentic value generated by the authentication center.

In some embodiments, the authentication center generates the first security credential based on the random number, the identifier of the first device, an identifier of the authentication center, and the private key of the authentication center. For example, the authentication center generates a first security parameter based on the hash function. The first security parameter satisfies the following Formula (2).

$$S\_i = b\_i + \text{Hash}(\text{ID\_i} \| \text{ID\_authority} \| B\_i)\, \text{SK2} \qquad \text{Formula (2)}$$

$$B\_i = b\_i \cdot G + A\_i$$

b_i represents a third random number. ID_authority represents the identifier of the authentication center. B_i and S_i represent security parameters of the first device.

The first security credential includes at least one of the identifier of the authentication center, the security parameter of the first device, the hash function, and the elliptic curve identifier.

**Step 450: The authentication center sends second ciphertext to the first device, where the second**

**ciphertext includes the first security credential.**

The authentication center calculates the identifier of the first device, the identifier of the authentication center, the encryption parameter, and the security parameter of the first device based on the temporary key, to obtain the second ciphertext. For example, a calculation manner of the second ciphertext is as follows: AES-GCM(n_i,ID_i∥ID_authority∥A_i∥B_i∥S_i).

**Step 460: The first device generates the public key and the private key of the first device based on the first security credential.**

The first device decrypts the second ciphertext based on the temporary key, to obtain the identifier of the first device, the identifier of the authentication center, the encryption parameter, and the security parameter of the first device. A decryption calculation manner of the second ciphertext is as follows: ID_i∥ID_authority∥A_i∥B_i∥S_i=Dec(n).

In some embodiments, the first device verifies, based on the public key of the authentication center, the identifier of the first device, and the identifier of the authentication center, that the first security credential is valid, and generates the public key and the private key of the first device based on the first security credential. For example, the first device verifies the first security credential based on the hash function according to the elliptic curve cryptography, generates the public key and the private key of the first device, and stores the public key and the private key of the first device. The public key of the first device and the private key of the first device satisfy Formula (3).

$$\text{if } S\_i \cdot G + Ai == T\_i + B\_i$$

$$T\_i = Hash(ID\_i \| D\_authority \| B\_i) \text{ PK2}$$

$$pk\_i = B\_i + T\_i; \text{ and } sk\_i = a\_i + s\_i \qquad \text{Formula (3)}$$

pk_i represents the public key of the first device. sk_i represents the private key of the first device.

In this way, after successfully verifying the first device that is to access the internet of things, the authentication center distributes the first security credential to the first device. Therefore, in the registration phase, the authentication center verifies the first device, to ensure security of distributing the security credential, and avoid distributing the security credential to an unauthorized device. In addition, the first device generates the public key and the private key of the first device according to the elliptic curve cryptography, to effectively reduce occupation of a computing resource and a storage resource of the first device, avoid transmission of the public key and the private key of the first device, reduce an obtaining risk, and improve security of the public key and the private key of the first device.

It should be noted that any device that is to access the internet of things can perform the registration procedure based on the descriptions in the foregoing embodiment, to obtain a security credential from the authentication center, so as to generate a public key and a private key based on the security credential. In the internet of things, devices store public keys and private keys of the devices, and the public keys and the private keys of the devices are different. The authentication center manages the public key and the private key of the authentication center, and does not need to manage the public key or the private key of the device, or the security credential, so that an authentication mechanism is decentralized, complexity of key management is reduced, and security of the public key and private key of the device is improved. The authentication center may configure a pair of a public key and a private key, or may configure two pairs of public keys and private keys. When the first device generates the first ciphertext and generates the public key and the private key of the first device, different public keys of the authentication center are used, to improve security of the registration procedure.

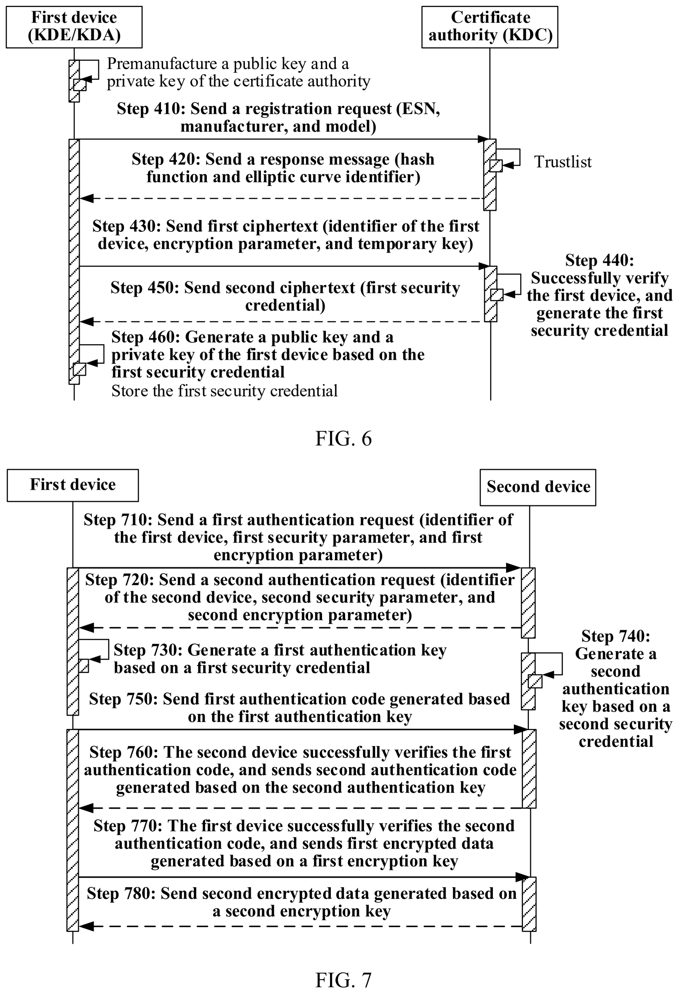

Optionally, as shown in FIG. 6, the public key and the private key of the authentication center may be preconfigured for the device that is to access the internet of things. After the authentication center successfully verifies the device, the response message fed back to the device may not include the public key or the private key of the authentication center, but include the hash function and the elliptic curve identifier.

After successfully registering with the authentication center, the first device may perform two-way authentication and communication with another device in the internet of things.

FIG. 7 is a schematic flowchart of data transmission in an authentication phase according to this application. Herein, an example in which authentication is performed between a first device and a second device for data transmission is used for description. The first device and the second device may be any devices in a network, such as the devices serving as the key authentication agents or the key authentication edges in FIG. 1. As shown in FIG. 7, the method includes the following steps.

**Step 710: The first device sends a first authentication request to the second device.**

The first authentication request includes parameters related to the first device, for example, an identifier of the first device, a first security parameter, and a first encryption parameter.

Optionally, the first authentication request may serve as payload content of a user datagram protocol (User Datagram Protocol, UDP) packet.

**Step 720: The second device sends a second authentication request to the first device.**

The second authentication request includes parameters related to the second device, for example, an identifier of the second device, a second security parameter, and a second encryption parameter.

**Step 730: The first device generates a first authentication key based on a first security credential.**

The first device generates the first authentication key based on the first security credential according to an elliptic curve cryptography. The elliptic curve cryptography (Elliptic curve cryptography, ECC) is a public-key encryption system. A mathematical basis of the elliptic curve cryptography relies on difficulty of calculating an elliptic discrete logarithm on an Abel additive group including rational points on an elliptic curve. Due to advantages such as high security, a high processing speed, small occupied storage space, and small occupied bandwidth, generating the authentication key according to the elliptic curve cryptography implements lightweight security authentication on an internet of things device in internet of things, and meets a resource performance requirement of the internet of things device.

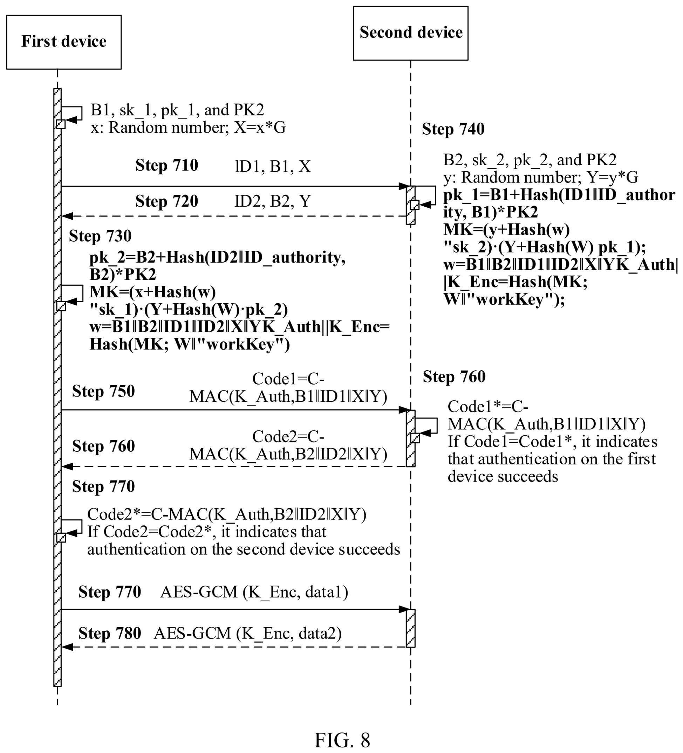

In some embodiments, the first device generates a public key of the second device based on a public key of an authentication center and the first security credential, and generates the first authentication key based on the public key of the second device and a private key of the first device. Optionally, when generating the first authentication key, the first device uses the identifier of the first device and a random number obtained from the first device as input parameters. For example, as shown in FIG. 8, the public key of the second device satisfies Formula (4), and the first authentication key satisfies Formula (5).

$$pk\_2 = B2 + Hash(ID2\|ID\_authority, B2)*PK2 \quad \text{Formula (4)}$$

$$K\_Auth = Hash(MK; W\|\text{"workKey"}) \quad \text{Formula (5)}$$

$$MK = (x + Hash(w)\text{"}sk\_1)(Y + Hash(W) \cdot pk\_2)$$
$$w = B1\|B2\|ID1\|ID2\|X\|Y$$

pk_2 represents the public key of the second device. B2 represents the second security parameter. ID2 represents the identifier of the second device. PK2 represents the public key of the authentication center. sk_1 represents the private key of the first device. B1 represents the first security parameter. ID1 represents the identifier of the first device. X and Y represent encryption parameters, X=x*G, Y=y*G, where x represents a fourth random number, and y represents a fifth random number.

Optionally, the first device generates a first encryption key according to Formula (5). K_Enc=Hash(MK; W\|\|"workKey").

**Step 740: The second device generates a second authentication key based on a second security credential.**

The second device generates the second authentication key based on the second security credential according to the elliptic curve cryptography. For specific explanations of the second device obtaining the second security credential from the authentication center, and generating the public key and a private key of the second device based on the second security credential, refer to the foregoing explanations of the registration procedure. Details are not described again.

The second device generates the public key of the first device based on the public key of the authentication center and the second security credential, and generates the second authentication key based on the public key of the first device and the private key of the second device. Optionally, when generating the second authentication key, the second device uses the identifier of the second device and a random number obtained from the second device as input parameters. For example, as shown in FIG. 8, the public key of the first device satisfies Formula (6), and the second authentication key satisfies Formula (7).

$$pk\_1 = B1 + Hash(ID1\|ID\_authority, B1)*PK2 \quad \text{Formula (6)}$$

$$K\_Auth = Hash(MK; W\|\text{"workKey"}) \quad \text{Formula (7)}$$

$$MK = (y + Hash(w)\text{"}sk\_2)(Y + Hash(W) \cdot pk\_1)$$
$$w = B1\|B2\|ID1\|ID2\|X\|Y$$

pk_1 represents the public key of the first device. sk_2 represents the private key of the second device.

Optionally, the second device generates a second encryption key according to Formula (5). K_Enc=Hash(MK; W\|"workKey").

**Step 750: The first device sends, to the second device, first authentication code generated based on the**

**first authentication key.**

The first device calculates the identifier of the first device and the random number based on the first authentication key, to generate the first authentication code. Because the random number is used as an input parameter for generating the authentication code, security of the authentication code can be improved. Because an attack device may fail to obtain the random number, authentication code generated by the attack device may fail to be identified, in other words, the authentication code is invalid data. The first authentication code satisfies the following Formula (8).

$$Code1=C\text{-}MAC(K\_Auth,B1\|ID1\|X\|Y) \qquad Formula\ (8)$$

Code1 represents the first authentication code. C-MAC represents an encryption algorithm. K_Auth represents the first authentication key.

**Step 760: The second device successfully verifies the first authentication code, and sends, to the first device, second authentication code generated based on the second authentication key.**

The second device may generate first verification code based on the second authentication key by using a method for generating the first authentication code by the first device, and verify whether the first authentication code is valid. For example, the second device determines whether the first verification code is the same as the first authentication code. When the first verification code is the same as the first authentication code, it is determined that the first device is successfully authenticated, indicating that the first authentication code is valid. When the first verification code is different from the first authentication code, it is determined that authentication on the first device fails, indicating that the first authentication code is invalid. For example, if the first device is an attack device, the first authentication key generated by the first device may be incorrect, resulting in a failure of the authentication. The second authentication code satisfies the following Formula (9).

$$Code1^{*}=C\text{-}MAC(K\_Auth,B1\|ID1\|X\|Y) \qquad Formula\ (9)$$

Code1* represents the first verification code. K_Auth represents the second authentication key. If Code1=-Code1*, it indicates that the authentication on the first device succeeds.

After the authentication on the first device succeeds, the second device calculates the identifier of the first device and the random number based on the second authentication key, to generate the second authentication code. The second authentication code satisfies the following Formula (10).

$$Code2=C\text{-}MAC(K\_Auth,B2\|ID2\|X\|Y) \qquad Formula\ (10)$$

Code2 represents the second authentication code. C-MAC represents the encryption algorithm. K_Auth represents the second authentication key.

**Step 770: The first device successfully verifies the second authentication code, and sends, to the second device, first encrypted data generated based on the first encryption key.**

The first device may generate second verification code based on the first authentication key by using a method for generating the second authentication code by the second device, and verify whether the second authentication code is valid. For example, the second device determines whether the second verification code is the same as the second authentication code. When the second verification code is the same as the second authentication code, it is determined that authentication on the second device succeeds, indicating that the second authentication code is valid. When the second verification code is different from the second authentication code, it is determined that authentication on the second device fails, indicating that the second authentication code is invalid. For example, if the second device is an attack device, the second authentication key generated by the second device may be incorrect, resulting in a failure of the authentication. The second verification code satisfies the following Formula (11).

$$Code2^{*}=C\text{-}MAC(K\_Auth,B2\|ID2\|X\|Y) \quad Formula\ (11)$$

Code2* represents the second verification code. K_Auth represents the first authentication key. If Code2=-Code2*, it indicates that the authentication on the second device succeeds.

A calculation method of the first encrypted data is as follows: AES-GCM(K _Enc, data1). K_Enc represents the first encryption key.

**Step 780: The second device sends, to the first device, second encrypted data generated based on the second encryption key.**

A calculation method of the second encrypted data is as follows: AES-GCM(K_Enc, data2). K_Enc represents the second encryption key.

In this way, the first device and the second device generate a public key of each other based on the hash function according to the elliptic curve cryptography, and generate the authentication key based on the public key of each other. In other words, a same authentication key is generated based on different input parameters according to an asymmetric encryption algorithm. Transmission of the public key and the authentication key does not need to be performed between the devices, to avoid obtaining of the public key and the authentication key by an unauthorized device, and improve security of the public key and the authentication key. Two-way authentication is completed between the first device and the second device based on the authentication key, a data amount of ciphertext is small, and occupied bandwidth is reduced. Therefore, security authentication on an internet of things device with constrained resources is implemented, network attacks on the internet of things are reduced, and network security of the internet of things is improved.

Optionally, when a device in the internet of things accesses a network for a non-first time, for example, when the device is restarted, the device does not need to register with the authentication center again, and only needs to perform mutual authentication with a device that needs to communicate with the device, thereby improving performance of mutual authentication between the devices.

In addition, according to the solution provided in this application, there is no need to add a device to the internet of things, modify hardware, or increase a memory capacity. This reduces deployment costs. An SDK manner of terminal software may be used for configuration. This is simple and easy to deploy.

After the device in the internet of things is successfully registered with the authentication center, the authentication center may manage a key life cycle in a system. Key update is an important part of key management and is a procedure of replacing an old key with a new key.

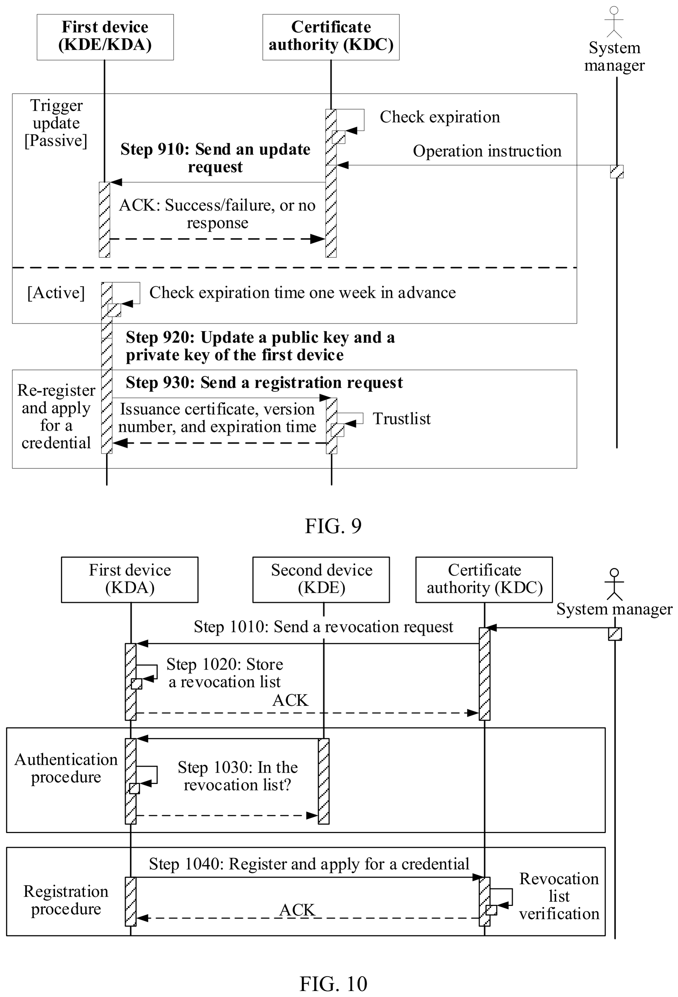

FIG. 9 is a schematic flowchart of key update in a management phase according to this application. Herein, an example in which a first device updates a key is used for description. An authentication center may serve as a key distribution center. The first device may be serve as a key authentication agent or a key authentication edge. As shown in FIG. 9, the method includes the following steps.

**Step 910: The authentication center sends an update request to the first device.**

The authentication center may send the update request to the first device based on an operation instruction of a system administrator. Alternatively, the authentication center may periodically send the update request to the first device. The update request indicates to update a security credential.

For example, the authentication center may periodically update a public key and a private key of the authentication center. The authentication center sends an updated security credential to the first device. An update period may be five years, and the update may be performed one month in advance. The first device generates an updated public key and an updated private key based on the updated security credential, to implement update of a public key and a private key of the first device.

The authentication center may record a version number of the security credential, to support credential update. Before version number rollover, devices automatically re-negotiate.

**Step 920: The first device updates the public key and the private key of the first device.**

The first device may update the public key and the private key of the first device based on the update request of the authentication center. Alternatively, the first device periodically updates the public key and the private key of the first device. An update period may be one year, and the update may be performed one week in advance.

**Step 930: The first device sends a registration request to the authentication center.**

After updating the public key and the private key of the first device, the first device re-registers with the authentication center. For a specific explanation of a registration procedure, refer to the explanations in the foregoing embodiment. Details are not described again.

In this way, based on a key update mechanism, a key is updated before a life cycle of the key ends, or when it is known or suspected that the key is leaked, to improve security of the public key and the private key of the device, the security credential, an authentication key, and an encryption key in an internet of things.

FIG. 10 is a schematic flowchart of key revocation in a management phase according to this application. Herein, an example in which a first device updates a key is used for description. An authentication center may serve as a key distribution center. The first device may serve as a key authentication agent, and a second device may serve as a key authentication edge. As shown in FIG. 10, the method includes the following steps. The authentication center sends a revocation request to the first device, where the revocation request includes an identifier of the first device, a public key of the authentication center, and a revocation list (step 1010). Optionally, the authentication center sends the revocation request to the first device based on an operation instruction of a system administrator. The first device stores the revocation list and the public key of the authentication center (step 1020). When performing an authentication procedure, the first device checks whether an identifier of the second device is in the revocation list. If the identifier of the second device is in the revocation list, authentication on the second device fails; or if the identifier of the second device is not in the revocation list, authentication on the second device succeeds (step 1030). When performing a registration procedure, the first device sends a registration request to the authentication center, and the authentication center checks whether the identifier of the first device is in the revocation list. If the identifier of the first device is in the revocation list, registration of the first device fails; or if the identifier of the first device is not in the revocation list, registration of the first device succeeds (step 1040). In the registration procedure, a credential application procedure, and a session establishment procedure, whether a device has been revoked needs to be checked, to avoid using of a revoked security credential for authentication.

Optionally, a protocol based on which a packet is forwarded in the registration procedure, the authentication procedure, and the management procedure in this application may be a certificateless public key cryptography over the constrained application protocol (Certificateless Public Key Cryptography over The Constrained Application Protocol, CLPKC over CoAP) or an alternative interactive protocol.

It may be understood that, to implement functions in the foregoing embodiment, the device includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

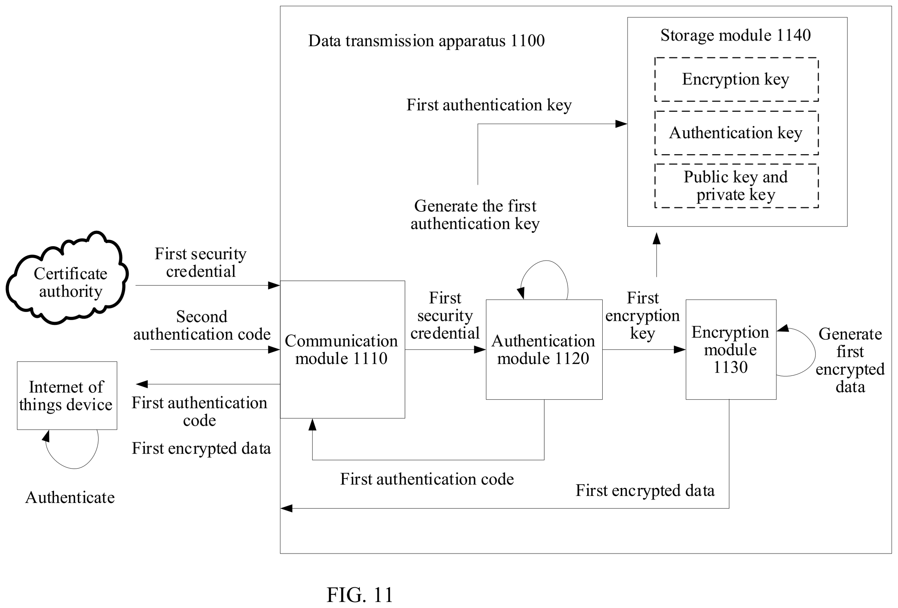

The foregoing describes, with reference to FIG. 1 to FIG. 10, in detail the data transmission method provided in this application. The following describes, with reference to FIG. 11, a data transmission apparatus provided in this application.

FIG. 11 is a diagram of a structure of a possible data transmission apparatus according to this application. The data transmission apparatus may be configured to implement a function of the device in the internet of things in the foregoing method embodiments. Therefore, the data transmission apparatus can also implement beneficial effects of the foregoing method embodiments. In this embodiment, the data transmission apparatus may be the device shown in FIG. 4 or FIG. 7, or may be a module (for example, a chip) used in a server.

As shown in FIG. 11, the data transmission apparatus 1100 includes a communication module 1110, an authentication module 1120, an encryption module 1130, and a storage module 1140. The data transmission apparatus 1100 is configured to implement a function of the first device or the second device in the method embodiment shown in FIG. 4 or FIG. 7.

The data transmission apparatus 1100 is configured to implement the function of the first device in the method embodiment shown in FIG. 4 or FIG. 7.

The communication module 1110 is configured to obtain a first security credential from an authentication center. For example, the communication module 1110 is configured to perform step 410, step 430, and step 460 in FIG. 4.

The authentication module 1120 is configured to generate a first authentication key based on the first security credential, and generate first authentication code based on the first authentication key. For example, the authentication module 1120 is configured to perform step 710, step 730, and step 750 in FIG. 7.

The encryption module 1130 is configured to: after the first authentication code is successfully authenticated by a second device, process to-be-transmitted data based on a first encryption key, to obtain first encrypted data. For example, the encryption module 1130 is configured to perform step 770 in FIG. 7.

The data transmission apparatus 1100 is configured to implement the function of the second device in the method embodiment shown in FIG. 4 or FIG. 7.

The communication module 1110 is configured to receive first authentication code sent by a first device and a second security credential sent by an authentication center. For example, the communication module 1110 is configured to perform step 410, step 430, and step 460 in FIG. 4.

The authentication module 1120 is configured to generate a second authentication key based on the second security credential; generate first verification code based on the second authentication key; and when the first verification code is the same as the first authentication code, determine that the first device is successfully authenticated. For example, the authentication module 1120 is configured to perform step 740 and step 760 in FIG. 7.

The encryption module 1130 is configured to: after the second authentication code is successfully authenticated by the first device, process to-be-transmitted data based on a second encryption key, to obtain second encrypted data. For example, the encryption module 1130 is configured to perform step 780 in FIG. 7.

Optionally, the authentication module 1120 is specifically configured to: generate a first authentication key based on a first security credential according to an elliptic curve cryptography, and generate the second authentication key based on the second security credential.

The storage module 1140 is configured to store an encryption key, a public key, a private key, and an authentication key, to perform two-way authentication with a device in an internet of things based on the authentication key.

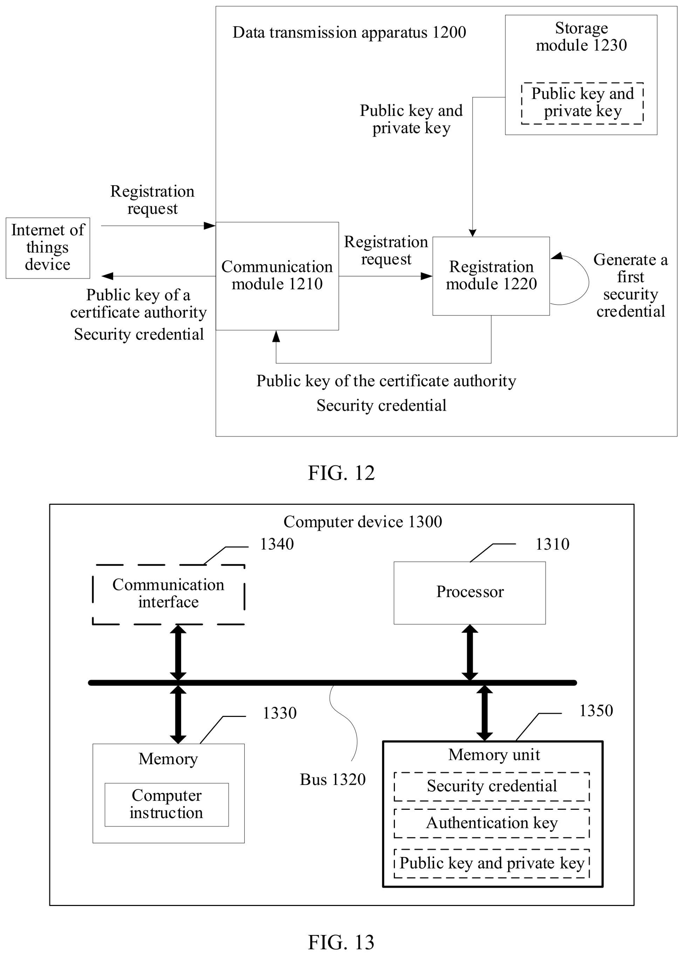

FIG. 12 is a diagram of a structure of a possible data transmission apparatus according to this application. The data transmission apparatus may be configured to implement a function of the authentication center in the internet of things in the foregoing method embodiments. Therefore, the data transmission apparatus can also implement beneficial effects of the foregoing method embodiments. In this embodiment, the data transmission apparatus may be the device shown in FIG. 4, or may be a module (for example, a chip) used in a server.

As shown in FIG. 12, the data transmission apparatus 1200 includes a communication module 1210, a registration module 1220, and a storage module 1230. The data transmission apparatus 1200 is configured to implement the function of the authentication center in the method embodiment shown in FIG. 4.

The communication module 1210 is configured to receive a registration request, and feed back a public key and a security credential of the authentication center. For example, the communication module 1210 is configured to perform step 420 and step 450 in FIG. 4.

The registration module 1220 is configured to generate a first security credential based on a random number, an identifier of a first device, an identifier of the authentication center, and a private key of the authentication center. For example, the registration module 1220 is configured to perform step 460 in FIG. 4.

Optionally, the registration module 1220 is specifically configured to: when verifying the first device as authorized, generate the first security credential based on the random number, the identifier of the first device, the identifier of the authentication center, and the private key of the authentication center.

The storage module 1230 is configured to store the public key and the private key of the authentication center.

It should be understood that the data transmission apparatus 1100 and the data transmission apparatus 1200 in embodiments of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field programmable gate array (field programmable gate array, FPGA), a generic array logic (generic array logic, GAL), or any combination thereof. Alternatively, when the heat dissipation control method shown in FIG. 4 or FIG. 7 may be implemented by using software, the modules of the data transmission method may also be software modules. The data transmission apparatus 1100, the data transmission apparatus 1200, and the modules of the data transmission apparatus 1100 and the data transmission apparatus 1200 may also be software modules.

The data transmission apparatus 1100 and the data transmission apparatus 1200 according to embodiments of this application may correspondingly perform the methods described in embodiments of this application, and the foregoing and other operations and/or functions of the units in the data transmission apparatus 1100 and the data transmission apparatus 1200 are respectively used to implement corresponding procedures of the methods in FIG. 4 or FIG. 7. For brevity, details are not described herein again.

FIG. 13 is a diagram of a structure of a computer device 1300 according to this application. As shown in FIG. 13, the computer device 1300 includes a processor 1310, a bus 1320, a memory 1330, a communication interface 1340, and a memory unit 1350 (which may also be referred to as a main memory (main memory) unit). The processor 1310, the memory 1330, the memory unit 1350, and the communication interface 1340 are connected through the bus 1320.

It should be understood that, in this embodiment, the processor 1310 may be a CPU, or the processor 1310 may be another general-purpose processor, a digital signal processor (digital signal processor, DSP), an ASIC, an FPGA or another programmable logical device, a discrete gate or a transistor logical device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 1340 is configured to implement communication between the computer device 1300 and an external device or component. In this embodiment, when the computer device 1300 is configured to implement a function of the device in the internet of things shown in FIG. 4 or FIG. 7, the communication interface 1340 is configured to obtain a security credential, so that the processor 1310 performs two-way authentication with the device in the internet of things based on the authentication key.

The bus 1320 may include a path, configured to transfer information between the foregoing components (such as the processor 1310, the memory unit 1350, and the memory 1330). In addition to a data bus, the bus 1320 may further include a power bus, a control bus, a status signal bus, and the like. However, for clear description, various types of buses are marked as the bus 1320 in the figure. The bus 1320 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. The bus 1320 may be classified into an address bus, a data bus, a control bus, and the like.

In an example, the computer device 1300 may include a plurality of processors. The processor may be a multi-core (multi-CPU) processor. The processor herein may be one or more devices, circuits, and/or computing units configured to process data (for example, computer program instructions).

It should be noted that, in FIG. 13, only an example in which the computer device 1300 includes one processor 1310 and one memory 1330 is used. Herein, the processor 1310 and the memory 1330 each indicate a type of component or device. In a specific embodiment, a quantity of components or devices of each type may be determined based on a service requirement.

The memory unit 1350 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory unit 1350 is configured to store information such as a security credential, a public key, a private key, an authentication key, and an encryption key.

The memory 1330 may correspond to a storage medium configured to store information such as an elliptic curve cryptography and a hash algorithm in the foregoing method embodiments, for example, a magnetic disk, such as a mechanical hard disk drive or a solid-state drive.

The computer device 1300 may be a general-purpose device or a dedicated device. For example, the computer device 1300 may be an edge device (for example, a box carrying a chip with a processing capability), or the like. Optionally, the computer device 1300 may alternatively be a server or another device having a computing capability.

It should be understood that the computer device 1300 according to this embodiment may correspond to the data transmission apparatus 1100 or the data transmission apparatus 1200 in this embodiment, and may correspond to a corresponding entity for performing any method in FIG. 4 or FIG. 7. In addition, the foregoing and other operations and/or functions of the modules in the data transmission apparatus 1100 or the data transmission apparatus 1200 are respectively used to implement corresponding procedures of the methods in FIG. 4 or FIG. 7. For brevity, details are not described herein again.

An embodiment of this application provides a chip, including a processor and a power supply circuit. The power supply circuit is configured to supply power to the processor, and the processor is configured to perform the operation steps of the data processing method in the foregoing method embodiments.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist in the computing device as discrete components.

All or some of the foregoing embodiments may be implemented by using software, hardware, firmware, or any combination thereof. When software is used to implement embodiments, all or some of embodiments may be implemented in the form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

     obtaining a security credential from an authentication center;
     generating an authentication key based on the security credential;
     after authentication code generated based on the authentication key is successfully authenticated by a second device, processing to-be-transmitted data based on an encryption key, to obtain encrypted data; and
     sending the encrypted data.

2. The method according to claim 1, wherein the method further comprises:
   generating the encryption key based on the security credential.

3. The method according to claim 1 or 2, wherein generating the authentication key based on the security credential comprises:
   according to an elliptic curve cryptography, generating the authentication key based on the security credential.

4. The method according to any one of claims 1 to 3, wherein generating the authentication key based on the security credential comprises:

     generating a public key of the second device based on a public key of the authentication center and the security credential; and
     generating the authentication key based on the public key of the second device and a private key of a first device.

5. The method according to any one of claims 1 to 4, wherein the method further comprises:
   calculating an identifier of the first device and a random number based on the authentication key, to generate the authentication code.

6. The method according to any one of claims 1 to 5, wherein the security credential comprises at least one of an identifier of the authentication center, a security parameter, a hash function, or an elliptic curve identifier.

7. The method according to any one of claims 1 to 6, wherein the method further comprises:
   when verifying the security credential as valid, generating a public key and the private key of the first device based on the security credential.

8. The method according to claim 7, wherein verifying the security credential as valid comprises:
   verifying the security credential as valid based on the public key of the authentication center, the identifier of the first device, and the identifier of the authentication center.

9. The method according to any one of claims 1 to 8, wherein the method further comprises:

     updating the public key and a private key of the authentication center;
     and/or
     updating the public key and the private key of the first device.

10. A data transmission method, comprising:

     receiving authentication code sent by a first device, wherein the authentication code is calculated based on a first authentication key that is generated based on a first security credential;
     generating verification code based on a second authentication key;
     when the verification code is the same as the authentication code, determining that the first device is successfully authenticated; and
     receiving encrypted data sent by the first device, wherein the encrypted data is obtained by encrypting with a first encryption key, and the first encryption key is calculated based on the first security credential.

11. The method according to claim 10, wherein the method further comprises:

     obtaining a second security credential from an authentication center; and

generating the second authentication key based on the second security credential.

12. The method according to claim 11, wherein generating the second authentication key based on the second security credential comprises:

generating a public key of the first device based on a public key of the authentication center and the second security credential; and
generating the second authentication key based on the public key of the first device and a private key of the second device.

13. The method according to any one of claims 10 to 12, wherein generating the verification code based on the second authentication key comprises:
calculating an identifier of the first device and a random number based on the second authentication key, to generate the verification code.

14. A data transmission method, comprising:

generating a first security credential based on a random number, an identifier of a first device, an identifier of an authentication center, and a private key of the authentication center; and
feeding back the first security credential, wherein the first security credential is used by the first device to generate an authentication key and perform authentication with a second device.

15. The method according to claim 14, wherein generating the first security credential based on the random number, the identifier of the first device, the identifier of the authentication center, and the private key of the authentication center comprises:
when verifying the first device as authorized, generating the first security credential based on the random number, the identifier of the first device, the identifier of the authentication center, and the private key of the authentication center.

16. A data transmission apparatus, wherein the apparatus comprises:

a communication module, configured to obtain a security credential from an authentication center;
an authentication module, configured to generate an authentication key based on the security credential, and generate authentication code based on the authentication key; and
an encryption module, configured to: after the authentication code is successfully authenticated by a second device, process to-be-transmitted data based on an encryption key, to obtain encrypted data, wherein
the communication module is further configured to send the encrypted data to the second device.

17. The apparatus according to claim 16, wherein the authentication module is further configured to:
generate the encryption key based on the security credential.

18. The apparatus according to claim 16 or 17, wherein when generating the authentication key based on the security credential, the authentication module is specifically configured to:
according to an elliptic curve cryptography, generate the authentication key based on the security credential.

19. The apparatus according to any one of claims 16 to 18, wherein when generating the authentication key based on the security credential, the authentication module is specifically configured to:

generate a public key of the second device based on a public key of the authentication center and the security credential; and
generate the authentication key based on the public key of the second device and a private key of a first device.

20. The apparatus according to any one of claims 16 to 19, wherein when generating the authentication code based on the authentication key, the authentication module is specifically configured to:
calculate an identifier of the first device and a random number based on the authentication key, to generate the authentication code.

21. The apparatus according to any one of claims 16 to 20, wherein the security credential comprises at least one of an identifier of the authentication center, a security parameter, a hash function, and an elliptic curve identifier.

**22.** The apparatus according to any one of claims 16 to 21, wherein the authentication module is further configured to: when verifying the security credential as valid, generate a public key and the private key of the first device based on the security credential.

**23.** The apparatus according to claim 22, wherein when verifying the security credential as valid, the authentication module is specifically configured to:
verify the security credential as valid based on the public key of the authentication center, the identifier of the first device, and the identifier of the authentication center.

**24.** The apparatus according to any one of claims 16 to 23, wherein the authentication module is further configured to:

update the public key and a private key of the authentication center;
and/or
update the public key and the private key of the first device.

**25.** A data transmission apparatus, wherein the apparatus comprises:

a communication module, configured to receive authentication code sent by a first device, wherein the authentication code is calculated based on a first authentication key that is generated based on a first security credential; and
an authentication module, configured to generate verification code based on a second authentication key, wherein
the authentication module is further configured to: when the verification code is the same as the authentication code, determine that the first device is successfully authenticated; and
the communication module is further configured to receive encrypted data sent by the first device, wherein the encrypted data is obtained by encrypting with a first encryption key, and the first encryption key is calculated based on the first security credential.

**26.** The apparatus according to claim 25, wherein

the communication module is further configured to obtain a second security credential from the authentication center; and
the authentication module is further configured to generate the second authentication key based on the second security credential.

**27.** The apparatus according to claim 26, wherein when generating the second authentication key based on the second security credential, the authentication module is specifically configured to:

generate a public key of the first device based on a public key of the authentication center and the second security credential; and
generate the second authentication key based on the public key of the first device and a private key of the second device.

**28.** The apparatus according to claim 25 or 26, wherein when generating the verification code based on the second authentication key, the authentication module is specifically configured to:
calculate an identifier of the first device and a random number based on the second authentication key, to generate the verification code.

**29.** A data transmission apparatus, wherein the apparatus comprises:

a registration module, configured to generate a first security credential based on a random number, an identifier of a first device, an identifier of an authentication center, and a private key of the authentication center; and
a communication module, configured to feed back the first security credential, wherein the first security credential is used by the first device to generate an authentication key and perform authentication with the second device.

**30.** The apparatus according to claim 29, wherein when generating the first security credential based on the random number, the identifier of the first device, the identifier of the authentication center, and the private key of the authentication center, the registration module is specifically configured to:

when verifying the first device as authorized, generate the first security credential based on the random number, the identifier of the first device, the identifier of the authentication center, and the private key of the authentication center.

31. A computer device, wherein the computer device comprises a memory and a processor, the memory is configured to store a group of computer instructions, and when executing the group of computer instructions, the processor performs an operation step of the method according to any one of claims 1 to 9, performs an operation step of the method according to any one of claims 10 to 13, or performs an operation step of the method according to claim 14 or 15.

32. A communication system, wherein the communication system comprises an authentication center, a first device, and a second device, the first device is configured to perform an operation step of the method according to any one of claims 1 to 9, the second device is configured to perform an operation step of the method according to any one of claims 10 to 13, and the authentication center is configured to perform an operation step of the method according to claim 14 or 15.

**Internet of things 100**

Medical system

Access security

Asset management

Environment monitoring

...

Personnel positioning

Cloud

Server 130

Device management

Terminal management

Secure access

Container management

Application program management

**Key distribution center 1**

Centralized management and control system

Network analyzer

AC-IoT

**Key distribution center 2**

Network device 120

Security credential

Credential distribution protocol

Pipe

Seamless cloud data integration

Device-to-device internet of things security

Network device 120

Network device 120

Network device 120

**Key authentication agent**

Edge computing, software-defined internet of things, data transmission, and wired+wireless internet of things converged access

Network device 120

Authentication key calculation

Credential security protocol

Network device 120

Network device 120

Edge

An internet of things device deploys an operating system and a software development kit to enable a terminal to access a cloud campus in a simple and secure manner

**Key authentication edge**

Device

Authentication key calculation

Credential security protocol

Internet of things device 110

Switch

Temperature control device

Lamp

Camera

...

Label

Gate

Access control device

Smoke sensor

Perimeter

FIG. 1

Internet of things 200

Server 210 (key distribution center and key authentication agent)

Security authentication

Configuration delivery

Data reporting

Version update

**Controller**

Security credential

Registration query

**Registration center**

Campus network

Client 220 (key authentication edge)

Network switch

FIG. 2

FIG. 3

| First device (KDE/KDA) | | Certificate authority (KDC) |
|---|---|---|

**Step 410: Send a registration request (ESN, manufacturer, and model)**

**Step 420: Send a response message (public key of the certificate authority, hash function, and elliptic curve identifier)**

Trustlist

**Step 430: Send first ciphertext (identifier of the first device, encryption parameter, and temporary key)**

**Step 440: Successfully verify the first device, and generate the first security credential**

**Step 450: Send second ciphertext (first security credential)**

**Step 460: Generate a public key and a private key of the first device based on the first security credential**

Store the first security credential

FIG. 4

```
First device                              Certificate
(KDE/KDA)                              authority (KDC)
```

SK1, PK1=SK1·G
SK2, PK2=SK2·G

**Step 410**

**Step 431**                    **Step 420**

K: Random number
ID_i: ESN or MAC
R_i=HKDF(K, ID_i‖nonce)
n_i=HKDF(K, R_i)
Authentic value=AES-
CMAC(n_i.ID_i‖R_i‖"MAC")

**Step 432: Send third          ENC(PK1,**       **Step 433: Decrypt the**
**cipher text**                 ID_i‖real value)   **third ciphertext**

ID_i, authentic value=Dec(SK1)

**Step 434: Acknowledgement**

a_i: Random number             **Step 435: Send**
A_i=a_i*G                      **first ciphertext**     **Step 440**
                                                        ID_i‖R_i‖n_i‖A_i=Dec(SK1)
    ENC(PK1, ID_i‖R_i‖n_i‖A_i)                          Authentic value*=AES-
                                                        CMAC(n_i.ID_i‖R_i‖"MAC");
            AES-                                         if authentic value*==authentic
GCM(n_i,ID_i‖ID_authority‖A_i‖B_i‖S_i)                  value
                                                        **b_i: Random number**
    **Step 450: Send second ciphertext**               **B_i=b_i·G+A_i**
                                                        **S_i=b_i**
                                                        **+Hash(ID_i‖ID_authority‖B_i)·S**
**Step 460**                                            **K2**
    ID_i‖ID_authority‖A_i‖B_i‖S_i=Dec(
    n)
    **T_i=Hash(ID_i‖D_authority‖B_i)·P**
    **K2**
    **if S_i·G+Ai==T_i+B_i**
    **pk_i=B_i+T_i; and sk_i=a_i+s_i**

    Store sk_i, pk_i, and B_i

## FIG. 5

**First device (KDE/KDA)**

**Certificate authority (KDC)**

Premanufacture a public key and a private key of the certificate authority

**Step 410: Send a registration request (ESN, manufacturer, and model)**

**Step 420: Send a response message (hash function and elliptic curve identifier)**

Trustlist

**Step 430: Send first ciphertext (identifier of the first device, encryption parameter, and temporary key)**

**Step 440: Successfully verify the first device, and generate the first security credential**

**Step 450: Send second ciphertext (first security credential)**

**Step 460: Generate a public key and a private key of the first device based on the first security credential**
Store the first security credential

FIG. 6

**First device**

**Second device**

**Step 710: Send a first authentication request (identifier of the first device, first security parameter, and first encryption parameter)**

**Step 720: Send a second authentication request (identifier of the second device, second security parameter, and second encryption parameter)**

**Step 730: Generate a first authentication key based on a first security credential**

**Step 740: Generate a second authentication key based on a second security credential**

**Step 750: Send first authentication code generated based on the first authentication key**

**Step 760: The second device successfully verifies the first authentication code, and sends second authentication code generated based on the second authentication key**

**Step 770: The first device successfully verifies the second authentication code, and sends first encrypted data generated based on a first encryption key**

**Step 780: Send second encrypted data generated based on a second encryption key**

FIG. 7

**First device**

**Second device**

B1, sk_1, pk_1, and PK2
x: Random number; X=x*G

**Step 740**

**Step 710**     ID1, B1, X

B2, sk_2, pk_2, and PK2
y: Random number; Y=y*G
**pk_1=B1+Hash(ID1‖ID_author ity, B1)*PK2**

**Step 720**     ID2, B2, Y

**MK=(y+Hash(w) "sk_2)·(Y+Hash(W) pk_1); w=B1‖B2‖ID1‖ID2‖X‖YK_Auth‖K_Enc=Hash(MK; W‖"workKey");**

**Step 730**

**pk_2=B2+Hash(ID2‖ID_authority, B2)*PK2**
**MK=(x+Hash(w) "sk_1)·(Y+Hash(W)·pk_2) w=B1‖B2‖ID1‖ID2‖X‖YK_Auth‖K_Enc= Hash(MK; W‖"workKey")**

**Step 750**     Code1=C-MAC(K_Auth,B1‖ID1‖X‖Y)

**Step 760**

Code1*=C-MAC(K_Auth,B1‖ID1‖X‖Y)
If Code1=Code1*, it indicates that authentication on the first device succeeds

**Step 760**     Code2=C-MAC(K_Auth,B2‖ID2‖X‖Y)

**Step 770**

Code2*=C-MAC(K_Auth,B2‖ID2‖X‖Y)
If Code2=Code2*, it indicates that authentication on the second device succeeds

**Step 770**     AES-GCM (K_Enc, data1)

**Step 780**     AES-GCM (K_Enc, data2)

FIG. 8

**FIG. 9**

**FIG. 10**

FIG. 11

Data transmission apparatus 1100

Storage module 1140
- Encryption key
- Authentication key
- Public key and private key

Encryption module 1130 — Generate first encrypted data

Authentication module 1120 — Generate the first authentication key

Communication module 1110

First authentication key

First encryption key

First security credential

First authentication code

First encrypted data

Certificate authority

Internet of things device — Authenticate

First security credential

Second authentication code

First authentication code

First encrypted data

Data transmission apparatus 1200

Storage module 1230

Public key and private key

Public key and private key

Registration request

Internet of things device

Communication module 1210

Registration request

Registration module 1220

Generate a first security credential

Public key of a certificate authority

Security credential

Public key of the certificate authority

Security credential

FIG. 12

Computer device 1300

1340

1310

Communication interface

Processor

1330

1350

Memory

Bus 1320

Memory unit

Computer instruction

Security credential

Authentication key

Public key and private key

FIG. 13

## INTERNATIONAL SEARCH REPORT

| International application No. |
| --- |
| **PCT/CN2024/093161** |

### A.    CLASSIFICATION OF SUBJECT MATTER

H04L9/32(2006.01)i

According to International Patent Classification (IPC) or to both national classification and IPC

### B.    FIELDS SEARCHED

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE: 物联网, 终端, 客户端, 加密, 解密, 密钥, 认证, 认证码, 验证码, 校验码, 服务器, 服务端, 中心, 云, 平台, 公钥, 私钥, 智能, IOT, terminal, client, encrypt, decrypt, secret key, authentication, authentication code, verification code, check code, server, center, cloud, platform, public key, private key, intelligent

### C.    DOCUMENTS CONSIDERED TO BE RELEVANT

| Category* | Citation of document, with indication, where appropriate, of the relevant passages | Relevant to claim No. |
| --- | --- | --- |
| X | CN 114785490 A (INFORMATION AND COMMUNICATION BRANCH, STATE GRID ZHEJIANG ELECTRIC POWER CO., LTD. et al.) 22 July 2022 (2022-07-22) description, paragraphs 60-185, and figures 3-8 | 1-3, 6, 9-11, 16-18, 21, 24-26, 31 |
| A | CN 113965364 A (XIDIAN UNIVERSITY) 21 January 2022 (2022-01-21) entire document | 1-32 |
| A | CN 111885058 A (UNIVERSITY OF BASRAH et al.) 03 November 2020 (2020-11-03) entire document | 1-32 |
| A | CN 110401530 A (GOLDCARD SMART GROUP CO., LTD.) 01 November 2019 (2019-11-01) entire document | 1-32 |
| A | US 2006031418 A1 (MIRRA CO., INC.) 09 February 2006 (2006-02-09) entire document | 1-32 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 June 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/093161**

| Patent document cited in search report | | | Publication date (day/month/year) | Patent family member(s) | | | Publication date (day/month/year) |
|---|---|---|---|---|---|---|---|
| CN | 114785490 | A | 22 July 2022 | None | | | |
| CN | 113965364 | A | 21 January 2022 | CN | 113965364 | B | 15 July 2022 |
| CN | 111885058 | A | 03 November 2020 | CN | 111885058 | B | 13 May 2022 |
| CN | 110401530 | A | 01 November 2019 | None | | | |
| US | 2006031418 | A1 | 09 February 2006 | None | | | |

Form PCT/ISA/210 (patent family annex) (July 2022)

**EP 4 697 646 A1**

## REFERENCES CITED IN THE DESCRIPTION

**Patent documents cited in the description**

- CN 202310572263